# EUROPEAN PATENT SPECIFICATION

(11) **EP 4 383 854 B1**
(45) Date of publication and mention of the grant of the patent: **28.10.2026**
(21) Application number: 22862900.2
(22) Date of filing: 12.07.2022
(51) Int. Cl.: H04W 56/00, H04N 21/8547, H04W 72/1268

(54) **DATA TRANSMISSION METHOD AND RELATED DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF ASSOCIÉ

(30) Priority: 31.08.2021 CN 202111015716
(43) Date of publication of application: 12.06.2024
(73) Proprietor: Huawei Technologies Co., Ltd., Shenzhen, Guangdong 518129 (CN)
(72) Inventor: XU, Bo, Shenzhen, Guangdong 518129 (CN); WU, Kedi, Shenzhen, Guangdong 518129 (CN); MA, Jingwang, Shenzhen, Guangdong 518129 (CN); CAI, Hua, Shenzhen, Guangdong 518129 (CN)
(74) Representative: Goddar, Heinz J.
(86) International application number: PCT/CN2022/105143
(87) International publication number: WO 2023/029759

(56) References cited:
- CN-A- 101 184 222
- CN-A- 104 750 245
- CN-A- 109 217 961
- US-A1- 2013 038 792
- US-A1- 2019 007 726
- US-B2- 9 400 555
- MAHLOUJI MALIHEH ET AL: "Analysis of Uplink Scheduling for Haptic Communications", 2018 IEEE GLOBECOM WORKSHOPS (GC WKSHPS), IEEE, 9 December 2018 (2018-12-09), pages 1 - 7, XP033519224, DOI: 10.1109/GLOCOMW.2018.8644406
- ZHOU LIANG ET AL: "Cross-Modal Collaborative Communications", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 27, no. 2, 1 April 2020 (2020-04-01), pages 112 - 117, XP011786128, ISSN: 1536-1284, [retrieved on 20200501], DOI: 10.1109/MWC.001.1900201
- MOHAMAD EID: "Mohamad Eid, New York University, Abu DhabiVineet Gokhale, University of South Bohemia, Czech Republic Tactile Internet Haptic Handshake and Metadata", vol. 1918.1, 6 November 2018 (2018-11-06), pages 1 - 13, XP068236429, Retrieved from the Internet <URL:https://ieee-sa.imeetcentral.com/p/aQAAAAADtvty> [retrieved on 20230721]
- MONA GHASSEMIAN: "Zaher Dawy, Sharief Oteafy, Nikos Pappas, Meryem Simsek, Oliver Holland, Stefan Aust, Vijay Rao, Vineet Gokale, Venkatesha Prasad, Mona Ghassemian", vol. 1918.1, 17 November 2020 (2020-11-17), pages 1 - 27, XP068258332, Retrieved from the Internet <URL:https://ieee-sa.imeetcentral.com/p/aQAAAAAEU0gm> [retrieved on 20230719]
- XIAOMI COMMUNICATIONS: "Motivation of study for Multi-UE coordination", vol. TSG RAN, no. Electronic Meeting; 20210628 - 20210702, 7 June 2021 (2021-06-07), XP052025809, Retrieved from the Internet <URL:https://ftp.3gpp.org/tsg_ran/TSG_RAN/TSGR_AHs/2021_06_RAN_Rel18_WS/Docs/RWS-210251.zip RWS-210251_Motivation_of_study_for_Multi-UE_coordination.doc> [retrieved on 20210607]

## Description

### TECHNICAL FIELD

Embodiments of this application relate to the communication field, and in particular, to a data transmission method and related devices.

### BACKGROUND

With popularity of remote operation applications, tactile information becomes important information carried in wireless communication. In addition, because a human body responds to tactile sensation faster, a sampling rate of the tactile information is much higher than a sampling rate of video information and audio information, and is usually at a magnitude of 1000 Hz. To be specific, compared with a frame rate of 20 Hz to 120 Hz for the video information, the tactile information is increased to a frame rate of 200 Hz to 1000 Hz. Collected data should be immediately packaged and transmitted to reduce a delay. This imposes great pressure on wireless network transmission.

In an existing tactile information sending technology, different transmission priorities are usually assigned to the tactile information that needs to be immediately packaged and transmitted and other information that does not need to be immediately packaged and transmitted, so that the tactile information that needs to be immediately transmitted is preferentially sent, and the other information that does not need to be immediately transmitted is not preferentially sent. In this way, a requirement of the tactile information for a transmission speed can be met. For example, in an existing 5G network, when receiving a plurality of data flows, a network device may classify the plurality of data flows to correspond to different air interface connection resources based on different data transmission requirements of the data flows, to schedule the air interface resources to meet the different data transmission requirements of the data flows.

In the existing tactile information sending technology, the tactile information and the other information are separately sent. However, if the tactile information has a dependency relationship or an association relationship with the other information, for example, information such as temperature information, audio information, or device status information that has an association relationship with the tactile information, because data transmission is not synchronous, invalid transmission of the tactile information or the other information occurs. For example, the tactile information fails to be transmitted, and the other information cannot be separately decoded. Alternatively, a transmission delay of the other information exceeds a waiting time range of the tactile information. Consequently, the tactile information and the other information that have an association relationship cannot be synchronously and completely transmitted, reducing transmission efficiency.

The document "Analysis of uplink scheduling for haptic communications" by M. Mahlouji et al., IEEE Globecom Workshops, Dec. 2018, describes how haptic communications affect other traffic services in the network.
The document "Cross-modal collaborative communications" by L. Zhou et al., IEEE Wireless Communications, Apr. 2020, describes a frame structure for cross-modal transmission. Haptic data is included in time-frequency resource blocks, which are originally occupied by audio and video data. The document "Tactile internet - haptic handshake and metadata" by M. Eid, IEEE Standards Association, Nov. 2018, describes a data packet comprising haptic data and video or audio data. The data packet further comprises a video frame number, a packet sequence number, a haptic timestamp, and an audio frame number.
US 9400555 B2 relates to computer systems for transmitting or receiving and playing a plurality of data streams, where at least one of the data streams includes video data packets and/or audio data packets and at least one other data stream includes further data packets that are synchronized with the video and/or audio data packets. The further data stream includes haptic data packets that include haptic command data generated in real time with the video and/or audio data streams, where the haptic command data is provided to a haptic output device configured to replicate or approximate sensations through the output of one or more mechanical forces in synchronization with the playing of video and/or audio from the video and/or audio data streams.
The 3GPP document "Motivation of study for multi-UE coordination" by Xiaomi Communications, RWS-210251, July 2021, describes that PDU sessions of UE devices associated with the same end user are coordinated.
An IEEE standards draft by Z. Dawy, S. Oteafy, N. Pappas, M. Simsek, O. Holland, S. Aust, V. Rao, V. Gokale, V. Prasad, and M. Ghassemian, Nov. 2020, describes tactile internet system components, resource descriptors for tactile internet devices, tactile internet operational states, and message definitions.

### SUMMARY

Embodiments of this application provide a data transmission method and related devices, to synchronously transmit tactile information and other types of information, to improve transmission efficiency and improve overall user experience.

The invention is defined by the independent claims. Advantageous embodiments of the invention are given by the dependent claims.

A first aspect of embodiments of this application provides a data transmission method. The method is applied to a data transmission network system. The data transmission network system includes a machine-side device, a network device, and a user-side device. The data transmission method is used to synchronously transmit tactile information and other types of information between the machine-side device, the network device, and the user-side device. The method includes: The network device receives a tactile data flow and at least one first data flow that are sent by the machine-side device, where the tactile data flow includes a synchronization identifier, and each of the at least one first data flow includes the synchronization identifier. The network device synchronizes transmission time of the tactile data flow and transmission time of the at least one first data flow.

In this possible implementation, the network device synchronizes the tactile data flow and the first data flow that have the same synchronization identifier, to synchronize the transmission time and a transmission priority of the tactile data flow and the transmission time and a transmission priority of the at least one first data flow, so that the tactile data flow and the at least one first data flow can be synchronously transmitted, thereby reducing a probability of invalid transmission, improving transmission efficiency, and improving overall user experience.

In a possible implementation of the first aspect, that the network device synchronizes a transmission time interval of the tactile data flow and a transmission time interval of the at least one first data flow includes: The network device determines the transmission time interval of the tactile data flow and the transmission time interval of the at least one first data flow; and the network device synchronizes the transmission time interval of the at least one first data flow and the transmission time interval of the tactile data flow.

In this possible implementation, a specific method for synchronizing the transmission time interval and the transmission priority of the tactile data flow and the transmission time interval and the transmission priority of the at least one first data flow by the network device is provided, thereby improving implementability of this solution.

In a possible implementation of the first aspect, the tactile data flow and the at least one first data flow are sent by a plurality of machine-side devices, and that the network device synchronizes the transmission time interval of the at least one first data flow and the transmission time interval of the tactile data flow includes: The network device determines the transmission time intervals of the tactile data flow and the at least one first data flow that are sent by the plurality of machine-side devices; and the network device synchronizes the transmission time intervals of the at least one first data flow and the tactile data flow that are sent by the plurality of machine-side devices.

In this possible implementation, a specific method for synchronizing the transmission time interval and the transmission priority of the tactile data flow and the transmission time interval and the transmission priority of the at least one first data flow by the network device is provided, thereby improving implementability of this solution.

In a possible implementation of the first aspect, before that the network device receives a tactile data flow and at least one first data flow that are sent by the machine-side device, the method further includes: The network device receives data flow parameter information sent by the machine-side device, where the data flow parameter information is parameter information of data flows transmitted between the network device and the machine-side device and between the network device and the user-side device, and the data flow parameter information includes a quality of service coefficient, a synchronization time reference, and a sensor frequency.

In a possible implementation of the first aspect, the method further includes: The network device determines the transmission priority of the tactile data flow and the transmission priority of the at least one first data flow; and the network device synchronizes the transmission priority of the tactile data flow and the transmission priority of the at least one first data flow.

In a possible implementation of the first aspect, that the network device determines the transmission priority of the tactile data flow and the transmission priority of the at least one first data flow includes: The network device determines products of channel quality coefficients and quality of service coefficients that correspond to the tactile data flow and the at least one first data flow as first parameters; and the network device determines ratios of the first parameter to a historical average rate as the transmission priority corresponding to the tactile data flow and the transmission priority corresponding to the at least one first data flow.

In a possible implementation of the first aspect, the method further includes: The network device sends the tactile data flow and the at least one first data flow to the user-side device.

In this possible implementation, the network device further sends the tactile data flow and the at least one first data flow to the user-side device, to implement synchronous transmission of the tactile data flow and the at least one first data flow.

In a possible implementation of the first aspect, the synchronization identifier includes a frame number of a tactile frame corresponding to the tactile data and a common air interface transmission time interval number.

A second aspect of embodiments of this application provides a data transmission method. The method is applied to a data transmission network system. The data transmission network system includes a machine-side device, a network device, and a user-side device. The data transmission method is used to synchronously transmit tactile information and other types of information between the machine-side device, the network device, and the user-side device. The method includes: The machine-side device obtains a first signal, where the first signal includes tactile data and at least one piece of first data. The machine-side device generates a corresponding tactile data flow and at least one corresponding first data flow based on the first signal, where the tactile data flow includes a synchronization identifier, and each of the at least one first data flow includes the synchronization identifier. The machine-side device sends the tactile data flow and the at least one first data flow to the network device.

In this possible implementation, the network device synchronizes the tactile data flow and the first data flow that have the same synchronization identifier, to synchronize transmission time and a transmission priority of the tactile data flow and transmission time and a transmission priority of the at least one first data flow, so that the tactile data flow and the at least one first data flow can be synchronously transmitted, thereby reducing a probability of invalid transmission, improving transmission efficiency, and improving overall user experience.

In a possible implementation of the second aspect, that the machine-side device generates a corresponding tactile data flow and at least one corresponding first data flow based on the first signal includes: The machine-side device generates the tactile data flow based on the tactile data, where the tactile data flow includes the synchronization identifier; and the machine-side device generates the at least one corresponding first data flow based on the at least one piece of first data, where each of the at least one first data flow includes the synchronization identifier.

In a possible implementation of the second aspect, before that the machine-side device obtains a first signal, the method further includes: The machine-side device sends data flow parameter information to the network device, where the data flow parameter information is parameter information of data flows transmitted between the network device and the machine-side device and between the network device and the user-side device, and the data flow parameter information includes a quality of service coefficient of the data flow, a synchronization time reference, and a sensor frequency.

In this possible implementation, a specific solution in which the machine-side device processes the first signal is provided, thereby improving implementability of embodiments of this application.

In a possible implementation of the second aspect, the synchronization identifier includes a frame number of a tactile frame corresponding to the tactile data and a common air interface transmission time interval number.

A third aspect of this application provides a network device. The network device has a function of implementing the method in any one of the first aspect or the possible implementations of the first aspect. The function may be implemented by hardware, or may be implemented by hardware by executing corresponding software. The hardware or the software includes one or more modules corresponding to the foregoing function, for example, a determining unit.

A fourth aspect of this application provides a machine-side device. The machine-side device has a function of implementing the method in any one of the second aspect or the possible implementations of the second aspect. The function may be implemented by hardware, or may be implemented by hardware by executing corresponding software. The hardware or the software includes one or more modules corresponding to the foregoing function, for example, an obtaining unit.

A fifth aspect of this application provides a network device. The network device includes at least one processor, a memory, an input/output (input/output, I/O) interface, and computer-executable instructions that are stored in the memory and that can be run on the processor. When the computer-executable instructions are executed by the processor, the processor performs the method in any one of the first aspect or the possible implementations of the first aspect.

A sixth aspect of this application provides a machine-side device. The machine-side device includes at least one processor, a memory, an input/output (input/output, I/O) interface, and computer-executable instructions that are stored in the memory and that can be run on the processor. When the computer-executable instructions are executed by the processor, the processor performs the method in any one of the second aspect or the possible implementations of the second aspect.

A seventh aspect of this application provides a computer-readable storage medium storing one or more computer-executable instructions. When the computer-executable instructions are executed by a processor, the processor performs the method in any one of the first aspect or the possible implementations of the first aspect.

An eighth aspect of this application provides a computer-readable storage medium storing one or more computer-executable instructions. When the computer-executable instructions are executed by a processor, the processor performs the method in any one of the second aspect or the possible implementations of the second aspect.

A ninth aspect of this application provides a computer program product storing one or more computer-executable instructions. When the computer-executable instructions are executed by a processor, the processor performs the method in any one of the first aspect or the possible implementations of the first aspect.

A tenth aspect of this application provides a computer program product storing one or more computer-executable instructions. When the computer-executable instructions are executed by a processor, the processor performs the method in any one of the second aspect or the possible implementations of the second aspect.

An eleventh aspect of this application provides a chip system. The chip system includes at least one processor, and the at least one processor is configured to implement the function in any one of the first aspect or the possible implementations of the first aspect. In a possible design, the chip system may further include a memory. The memory is configured to store program instructions and data necessary for an apparatus for processing an artificial intelligence model. The chip system may include a chip, or may include a chip and another discrete component.

A twelfth aspect of this application provides a chip system. The chip system includes at least one processor, and the at least one processor is configured to implement the function in any one of the second aspect or the possible implementations of the second aspect. In a possible design, the chip system may further include a memory. The memory is configured to store necessary program instructions and data necessary for an apparatus for data processing based on an artificial intelligence model. The chip system may include a chip, or may include a chip and another discrete component.

Based on the foregoing technical solutions, it can be learned that embodiments of this application have the following advantages:

Embodiments of this application provide the data transmission method. The method is applied to the data transmission network system. The data transmission network system includes the machine-side device, the network device, and the user-side device. The data transmission method is used to synchronously transmit the tactile information and the other types of information between the machine-side device, the network device, and the user-side device. The method includes: The network device receives the tactile data flow and the at least one first data flow that are sent by the machine-side device, where the tactile data flow includes the synchronization identifier, and each of the at least one first data flow includes the synchronization identifier. The network device synchronizes the transmission time and the transmission priority of the tactile data flow and the transmission time and the transmission priority of the at least one first data flow. In this possible implementation, the network device synchronizes the tactile data flow and the first data flow that have the same synchronization identifier, to synchronize the transmission time and the transmission priority of the tactile data flow and the transmission time and the transmission priority of the at least one first data flow, so that the tactile data flow and the at least one first data flow can be synchronously transmitted, thereby reducing the probability of invalid transmission, improving transmission efficiency, and improving overall user experience.

### BRIEF DESCRIPTION OF DRAWINGS

FIG. 1 is a schematic diagram of a scenario of tactile information transmission;
FIG. 2 is a network architecture diagram of a tactile information transmission network according to an embodiment of this application;
FIG. 3 is a schematic flowchart of a data transmission method according to an embodiment of this application;
FIG. 4 is a schematic diagram of a structure of a data flow in a data transmission method according to an embodiment of this application;
FIG. 5 is another schematic flowchart of a data transmission method according to an embodiment of this application;
FIG. 6 is another schematic flowchart of a data transmission method according to an embodiment of this application;
FIG. 7 is another schematic flowchart of a data transmission method according to an embodiment of this application;
FIG. 8 is a schematic diagram of a structure of a network device according to an embodiment of this application;
FIG. 9 is a schematic diagram of a structure of a machine-side device according to an embodiment of this application;
FIG. 10 is another schematic diagram of a structure of a network device according to an embodiment of this application;
FIG. 11 is another schematic diagram of a structure of a machine-side device according to an embodiment of this application; and
FIG. 12 is a schematic diagram of a structure of a tactile information transmission network according to an embodiment of this application.

### DESCRIPTION OF EMBODIMENTS

Embodiments of this application provide a data transmission method and related devices, to synchronously transmit tactile information and other types of information, to improve transmission efficiency and improve overall user experience.

Embodiments of this application are described below with reference to the accompanying drawings. It is clear that, the described embodiments are merely some rather than all of embodiments of this application. A person of ordinary skill in the art may know that with technical development and emergence of a new scenario, the technical solutions provided in embodiments of this application are also applicable to a similar technical problem.

In the specification, the claims, and the accompanying drawings of this application, the terms "first", "second", and the like are intended to distinguish between similar objects but do not necessarily indicate a particular order or sequence. It should be understood that data used in this way is interchangeable in appropriate cases so that embodiments of this application described herein can be implemented in other orders other than the order illustrated or described herein. In addition, the terms "include" and "have" and any other variants thereof are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

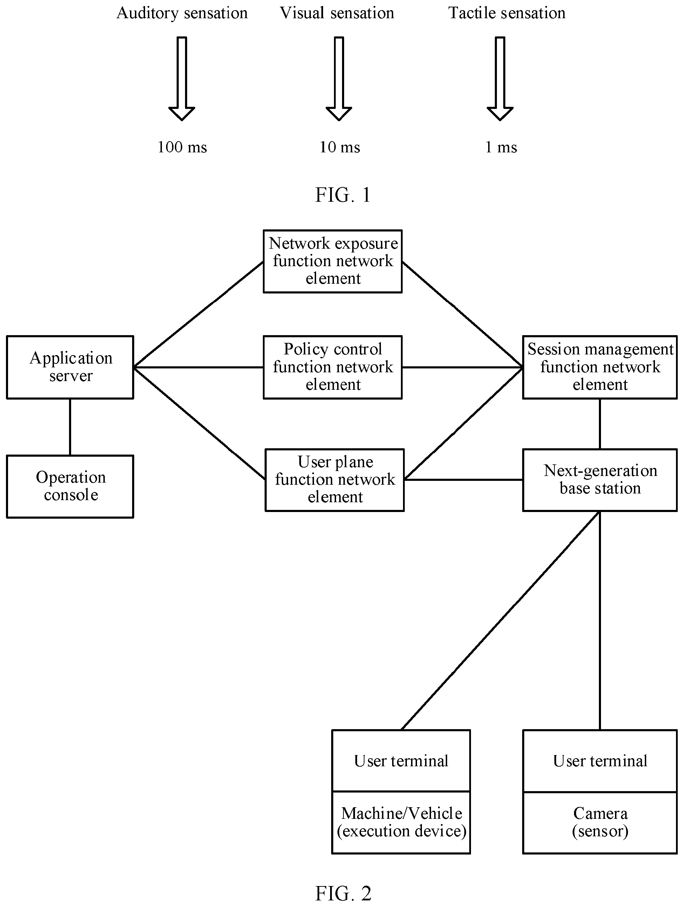

Refer to FIG. 1. With development of remote operation applications, tactile information becomes important information carried in wireless communication. In addition, because a human body responds to tactile sensation faster, a sampling rate of the tactile information is much higher than a sampling rate of video information and audio information, and is usually at a magnitude of 1000 Hz. To be specific, compared with a frame rate of 20 Hz to 120 Hz for the video information, the tactile information is increased to a frame rate of 200 Hz to 1000 Hz. Collected data should be immediately packaged and transmitted to reduce a delay. This imposes great pressure on wireless network transmission.

In an existing tactile information sending technology, different transmission priorities are usually assigned to the tactile information that needs to be immediately packaged and transmitted and other information that does not need to be immediately packaged and transmitted, so that the tactile information that needs to be immediately transmitted is preferentially sent, and the other information that does not need to be immediately transmitted is not preferentially sent. In this way, a requirement of the tactile information for a transmission speed can be met. For example, in an existing 5G network, when receiving a plurality of data flows, a network device may classify the plurality of data flows to correspond to different air interface connection resources based on different data transmission requirements of the data flows, to schedule the air interface resources to meet the different data transmission requirements of the data flows.

In the existing tactile information sending technology, the tactile information and the other information are separately sent. However, if the tactile information has a dependency relationship or an association relationship with the other information, for example, information such as temperature information, audio information, or device status information that has an association relationship with the tactile information, because data transmission is not synchronous, invalid transmission of the tactile information or the other information occurs. For example, the tactile information fails to be transmitted, and the other information cannot be separately decoded. Alternatively, a transmission delay of the other information exceeds a waiting time range of the tactile information. Consequently, the tactile information and the other information that have an association relationship cannot be synchronously and completely transmitted, reducing transmission efficiency.

Refer to FIG. 2. An embodiment of this application is applied to a tactile information transmission network. The tactile information transmission network includes a user-side device, a network device, and a machine-side device. The user-side device and the machine-side device are separately connected to the network device. This type of network connection may be a wired connection or a wireless connection.

The user-side device may include an application server and a user operation console that have service data flow management and combination functions. The user operation console may transmit information to a network device through the application server. The user-side device may include a feedback device and an operation device. The feedback device may be a display, a speaker, a finger feedback array, and an arm feedback array.

The machine-side device may include a user terminal (UE, user equipment), an application terminal having a data flow management function and a time synchronization marking function, an execution device, and a sensor.

The network device may include network devices such as a next-generation base station (gNB, generation NodeB) having an air interface resource scheduling function, that is, a 5G base station, a session management function (SMF, Session Management Function) network element having a session management function, a network exposure function (NEF, Network Exposure Function) network element, a policy control function (PCF, Policy Control Function) network element, and a user plane function (UPF, User plane Function) network element having a data flow management function and a QoS mapping function.

In embodiments of this application, before data transmission, the user-side device, the network device, and the machine-side device notify devices such as the UPF, the gNB, the UE, and an application terminal of quality of service (QoS, Quality of service) parameters of data flows on which service coding is performed and frame rates of sensors, and synchronize time references. For example, a high-QoS flow may include tactile data, a medium-QoS flow may include audio data and basic video I frame data, and a low-QoS flow may include video enhancement P frame data and other data (maintenance/alarm data and the like). The gNB may be further notified that UE 1 and UE 2 are cooperative terminals. For a synchronization reference, an air interface transmission time interval (TTI, transmission time interval) number or a frame number of the tactile data may be used as a timestamp. A frame rate of a tactile signal is 5000 Hz (2 ms), a frame rate of a video signal is 25 Hz (40 ms), and a frame rate of an audio signal is 50 Hz (20 ms).

Based on the foregoing tactile information transmission network, the following describes a data transmission method in embodiments of this application.

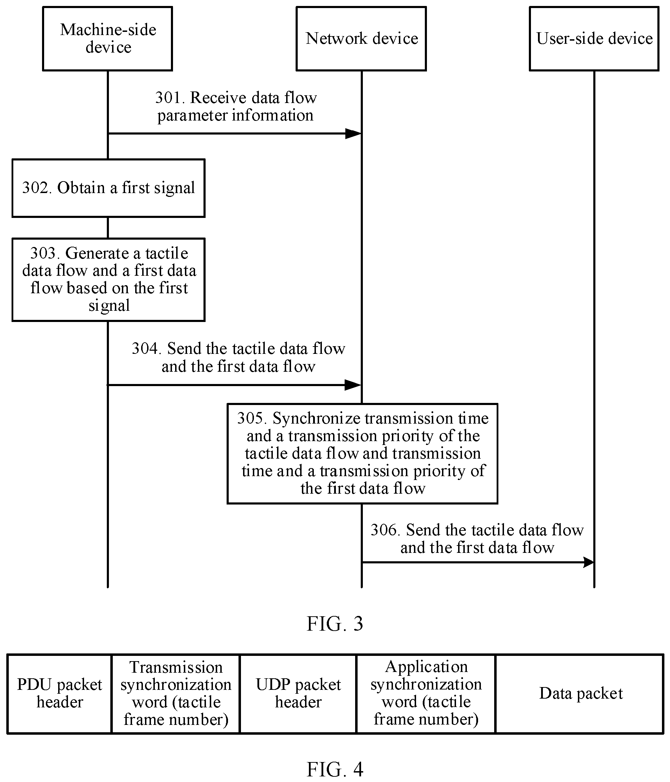

Refer to FIG. 3. An embodiment of this application provides a data transmission method and related devices.

301. A network device receives data flow parameter information.

The network device receives the data flow parameter information sent by a machine-side device, where the data flow parameter information is parameter information of data flows transmitted between the network device and the machine-side device and between the network device and a user-side device. The data flow parameter information includes a quality of service coefficient of the data flow, a synchronization time reference, and a sensor frequency.

Specifically, before data transmission, the user-side device, the network device, and the machine-side device notify devices such as a UPF, a gNB, UE, and an application terminal of quality of service (QoS, Quality of service) parameters of data flows on which service coding is performed and frame rates of sensors, and synchronize time references. For example, a high-QoS flow may include tactile data, a medium-QoS flow may include audio data and basic video I frame data, and a low-QoS flow may include video enhancement P frame data and other data (maintenance/alarm data and the like). The gNB may be further notified that UE1 and UE2 are cooperative terminals. For a synchronization reference, an air interface transmission time interval (TTI, transmission time interval) number or a frame number of the tactile data may be used as a timestamp. A frame rate of a tactile signal is 5000 Hz (2 ms), a frame rate of a video signal is 25 Hz (40 ms), and a frame rate of an audio signal is 50 Hz (20 ms).

302. The machine-side device obtains a first signal.

The network device receives the first signal sent by the machine-side device, where the first signal may include tactile data and at least one piece of first data. The at least one piece of first data may be data of a plurality of types, for example, audio data, video basic I frame data, video enhancement P frame data, and text data. This is not specifically limited herein.

In a possible implementation, the machine-side device includes a plurality of sensors such as an application terminal, a tactile sensor, a camera, and a microphone. The application terminal obtains the first signal through the plurality of sensors such as the tactile sensor, the camera, and the microphone.

303. The machine-side device generates a tactile data flow and a first data flow based on the first signal.

As shown in FIG. 4, the machine-side device generates the corresponding tactile data flow and the corresponding first data flow based on the first signal, that is, the tactile data and the at least one piece of first data. Specifically, the machine-side device generates the tactile data flow based on the tactile data, where a packet header of the tactile data flow includes a synchronization identifier. The machine-side device further generates the at least one corresponding first data flow based on the at least one piece of first data, where a packet header of each of the at least one first data flow includes the synchronization identifier. The synchronization identifier may be a frame number of a tactile frame corresponding to the tactile data or a common air interface TTI number.

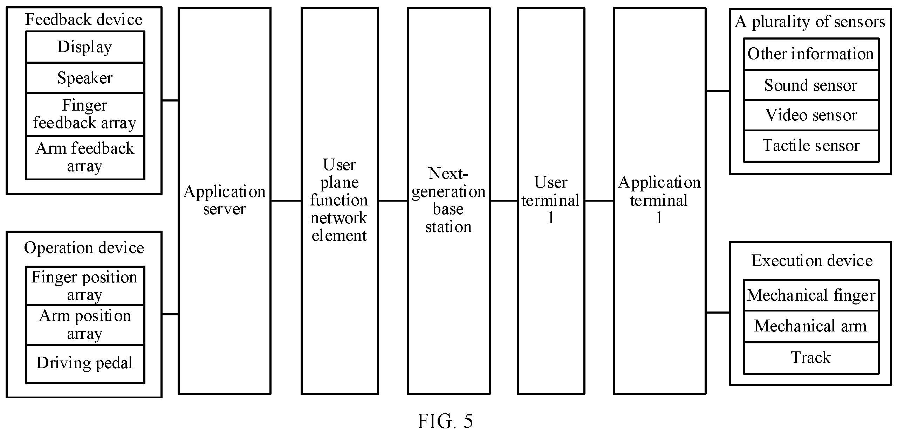

As shown in FIG. 5, in a possible implementation, the machine-side device includes a plurality of sensors such as an application terminal, a tactile sensor, a camera, and a microphone. After the application terminal receives first signals sent by the plurality of sensors such as the tactile sensor, the camera, and the microphone, the application terminal generates a tactile data flow by compressing and encoding the tactile data, generates at least one corresponding first data flow by compressing and encoding the at least one piece of first data, and then adds a frame number of a tactile frame corresponding to the tactile data to a packet header of the tactile data flow and a packet header of the at least one first data flow as an application synchronization word.

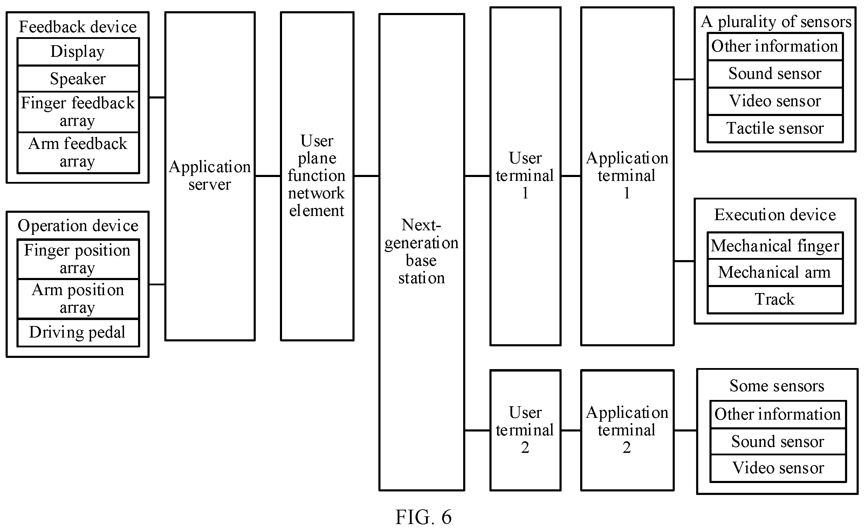

As shown in FIG. 6, in a possible implementation, the machine-side device includes a plurality of application terminals. After the plurality of application terminals receive corresponding tactile data and first data, the plurality of application terminals each generate a tactile data flow by compressing and encoding the tactile data, generate at least one corresponding first data flow by compressing and encoding the at least one piece of first data, and then add a common air interface TTI number to a packet header of the tactile data flow and a packet header of the at least one first data flow as an application synchronization word.

In a possible implementation, the machine-side device further includes a user terminal. After the application terminal generates a tactile data flow and at least one first data flow, the user terminal adds or deletes a transmission synchronization word, that is, a frame number of a tactile frame and frame rate information corresponding to the data flow, to or from a packet header of the tactile data flow and a packet header of the at least one first data flow.

The machine-side device in this embodiment of this application may further transmit other non-tactile application data, and the non-tactile application data has no association relationship with the tactile application data. The non-tactile application data does not include the foregoing synchronization word.

304. The machine-side device sends the tactile data flow and the first data flow to the network device.

The machine-side device sends the tactile data flow and the at least one first data flow to the network device. Correspondingly, the network device receives the tactile data flow and the at least one first data flow that are sent by the machine-side device.

305. The network device synchronizes transmission time and a transmission priority of the tactile data flow and transmission time and a transmission priority of the first data flow.

After the network device receives the tactile data flow and the first data flow, the network device obtains the transmission time and the transmission priority of the tactile data flow and the transmission time and the transmission priority of the first data flow, and synchronizes the transmission time and the transmission priority of the first data flow to be the same as the transmission time and the transmission priority of the tactile data flow.

In a possible implementation, the network device includes a next-generation base station gNB. After the gNB receives the tactile data flow and the first data flow, because the gNB has not established a synchronization relationship with the tactile data flow and the first data flow, the gNB first determines scheduling priorities based on QoS levels of the tactile data flow and the first data flow, to perform resource scheduling.

Specifically, a method for determining, by the gNB, the scheduling priority of the data flow includes: The scheduling priority P=(E*Y)/A, where P is the scheduling priority of the data flow, E is a channel quality parameter eff_{CQI}, Y is a QoS level coefficient of the data flow, and A is a historical average rate avgRate. In addition, the gNB may further determine the scheduling priority of the data flow in other manners. For example, the gNB directly determines the QoS level as the scheduling priority. This is not specifically limited herein.

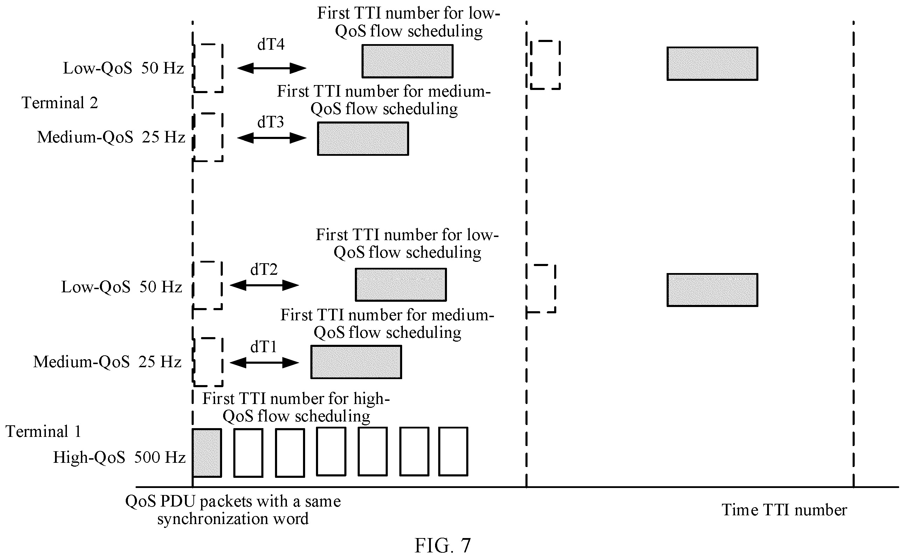

As shown in FIG. 7, in a possible implementation, the network device includes a next-generation base station gNB. After the gNB receives a plurality of data flows, the gNB starts to enter a synchronization training phase: The gNB finds a synchronization identifier, that is, data flows with a same synchronization word, that is, the foregoing tactile data flow and the foregoing first data flow, and then determines a first TTI number of each data flow, where the first TTI number is a TTI number for the first time of air interface scheduling of the data flow; and calculates a difference between first TTIs of each data flow and a high-QoS data flow that are from a same application terminal, that is, dT1, dT2, dT3, and dT4 in FIG. 7.

Then, the gNB enters a synchronization optimization scheduling phase: The gNB continuously calculates dT1, dT2, dT3, and dT4 and separately performs alpha filtering. For example, dT=a*dT+b*dT may be used, where a=0.95, and b=0.05. Synchronous optimization scheduling is more important because signals of tactile/video/audio sensors are collected at a fixed frame rate (that is, a sampling interval), and synchronized information in a plurality of sensors can provide more information for an operator. It can be learned from the training phase that TTI numbers of air interface transmission with synchronization information that may occur are: a high-QoS flow: T, a medium-QoS flow of a terminal 1: T+dT1, a low-QoS flow of the terminal 1: T+dT2, a medium-QoS flow of a terminal 2: T+dT3, and a low-QoS flow of the terminal 2: T+dT4. Then, in an air interface resource scheduler of the gNB, a scheduling priority of a TTI corresponding to each data flow is increased. For example, a scheduling priority P=(E*Y)/A*Ys, where P is a scheduling priority of the data flow, E is a channel quality parameter eff_{CQI}, Y is a QoS level coefficient of the data flow, A is a historical average rate avgRate, Ys is Y_{QoS}, and sync is generally 3.

306. The network device sends the tactile data flow and the first data flow to the user-side device.

The network device sends the tactile data flow and the first data flow to the user-side device. Correspondingly, the user-side device receives the tactile data flow and the first data flow that are sent by the network device.

In a possible implementation, the user-side device includes an application server and a plurality of feedback devices. The application server decodes the tactile data flow and the first data flow after receiving the tactile data flow and the first data flow, aligns signal time of each sensor based on the application synchronization word, and sends the tactile data flow and the first data flow to a corresponding feedback device. The feedback device may be a device such as an arm feedback array, a finger feedback array, a display, or a speaker.

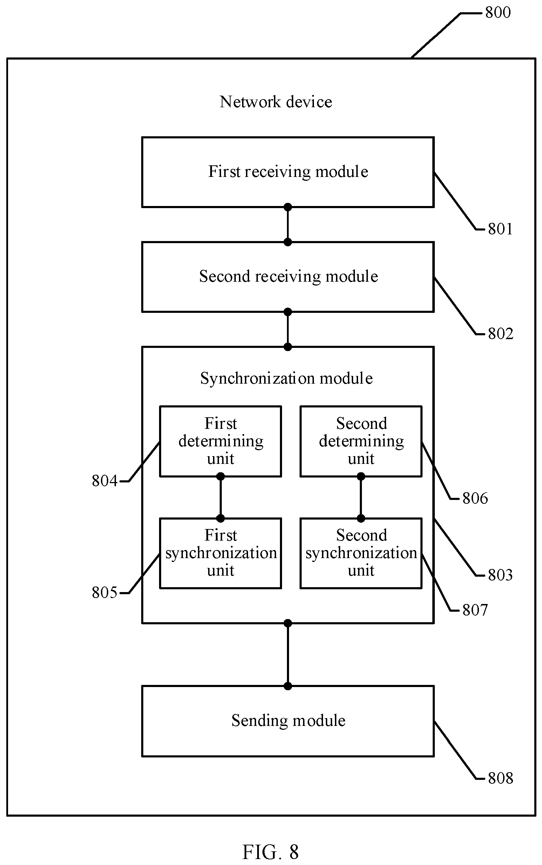

The following describes a network device in embodiments of this application. Refer to FIG. 8. An embodiment of this application provides a network device 800. The network device may be the network device in FIG. 3, and the network device 800 includes the following modules.

A first receiving module 801 is configured to receive data flow parameter information sent by a machine-side device, where the data flow parameter information is parameter information of data flows transmitted between the network device and the machine-side device and between the machine-side device and a user-side device, and the data flow parameter information includes a quality of service coefficient of a data flow, a synchronization time reference, and a sensor frequency. For a specific implementation, refer to step 301 in the embodiment shown in FIG. 3: The network device receives the data flow parameter information sent by the machine-side device. Details are not described herein again.

A second receiving module 802 is configured to receive a tactile data flow and at least one first data flow that are sent by the machine-side device, where the tactile data flow includes a synchronization identifier, and each of the at least one first data flow includes the synchronization identifier. For a specific implementation, refer to step 304 in the embodiment shown in FIG. 3: The machine-side device sends the tactile data flow and the first data flow to the network device. Details are not described herein again.

A synchronization module 803 is configured to synchronize transmission time and a transmission priority of the tactile data flow and transmission time and a transmission priority of the at least one first data flow. For a specific implementation, refer to step 305 in the embodiment shown in FIG. 3: The network device synchronizes the transmission time and the transmission priority of the tactile data flow and the transmission time and the transmission priority of the first data flow. Details are not described herein again.

In a possible implementation, the synchronization module 803 includes the following units.

A first determining unit 804 is configured to determine a transmission time interval of the tactile data flow and a transmission time interval of the at least one first data flow. For a specific implementation, refer to step 305 in the embodiment shown in FIG. 3: The network device synchronizes the transmission time of the tactile data flow and the transmission time of the first data flow. Details are not described herein again.

In a possible implementation, the first determining unit 804 is configured to determine the transmission time intervals of the tactile data flow and the at least one first data flow that are sent by a plurality of machine-side devices. For a specific implementation, refer to step 305 in the embodiment shown in FIG. 3: The network device synchronizes the transmission time of the tactile data flow and the transmission time of the first data flow. Details are not described herein again.

A first synchronization unit 805 is configured to synchronize the transmission time interval of the at least one first data flow and the transmission time interval of the tactile data flow. For a specific implementation, refer to step 305 in the embodiment shown in FIG. 3: The network device synchronizes the transmission time and the transmission priority of the tactile data flow and the transmission time and the transmission priority of the first data flow. Details are not described herein again.

In a possible implementation, the first synchronization unit 805 is configured to synchronize the transmission time intervals of the at least one first data flow and the tactile data flow that are sent by the plurality of machine-side devices. For a specific implementation, refer to step 305 in the embodiment shown in FIG. 3: The network device synchronizes the transmission time and the transmission priority of the tactile data flow and the transmission time and the transmission priority of the first data flow. Details are not described herein again.

A second determining unit 806 is configured to determine the transmission priority of the tactile data flow and the transmission priority of the at least one first data flow. Refer to step 305 in the embodiment shown in FIG. 3: The network device synchronizes the transmission time and the transmission priority of the tactile data flow and the transmission time and the transmission priority of the first data flow. Details are not described herein again.

In a possible implementation, the second determining unit 806 is configured to determine products of channel quality coefficients and quality of service coefficients that correspond to the tactile data flow and the at least one first data flow as first parameters; and determine ratios of the first parameters to a historical average rate as the transmission priority corresponding to the tactile data flow and the transmission priority corresponding to the at least one first data flow. For a specific implementation, refer to step 305 in the embodiment shown in FIG. 3: The network device synchronizes the transmission time and the transmission priority of the tactile data flow and the transmission time and the transmission priority of the first data flow. Details are not described herein again.

A second synchronization unit 807 is configured to synchronize the transmission priority of the tactile data flow and the transmission priority of the at least one first data flow. Refer to step 305 in the embodiment shown in FIG. 3: The network device synchronizes the transmission time and the transmission priority of the tactile data flow and the transmission time and the transmission priority of the first data flow. Details are not described herein again.

A sending module 808 is configured to send the tactile data flow and the at least one first data flow to the user-side device. For a specific implementation, refer to step 306 in the embodiment shown in FIG. 3: The network device sends the tactile data flow and the first data flow to the user-side device. Details are not described herein again.

In this embodiment, the network device may perform an operation performed by the network device in any embodiment shown in FIG. 3. Details are not described herein again.

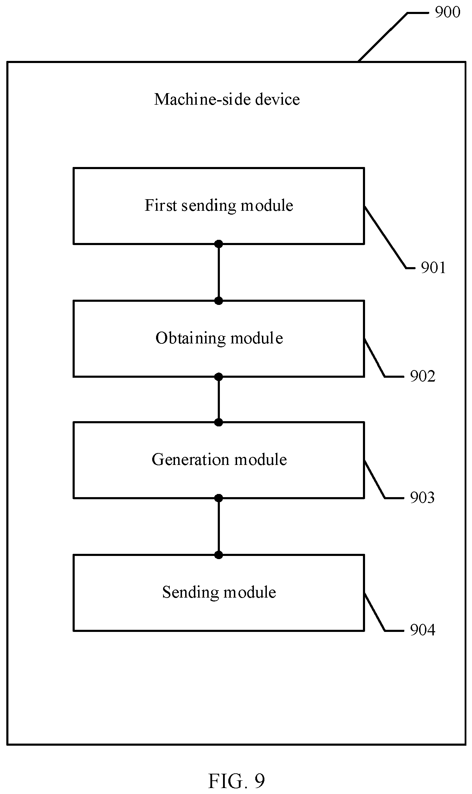

The following describes a machine-side device in embodiments of this application. Refer to FIG. 9. An embodiment of this application provides a machine-side device 900. The machine-side device may be the machine-side device in FIG. 3, and the machine-side device 900 includes the following modules.

A first sending module 901 is configured to send data flow parameter information to a network device, where the data flow parameter information is parameter information of data flows transmitted between the network device and a machine-side device and between the network device and a user-side device, and the data flow parameter information includes a quality of service coefficient of the data flow, a synchronization time reference, and a sensor frequency.

An obtaining module 902 is configured to obtain a first signal, where the first signal includes tactile data and at least one piece of first data. For a specific implementation, refer to step 302 in the embodiment shown in FIG. 3: The machine-side device obtains the first signal. Details are not described herein again.

A generation module 903 is configured to generate a corresponding tactile data flow and at least one corresponding first data flow based on the first signal, where the tactile data flow includes a synchronization identifier, and each of the at least one first data flow includes the synchronization identifier. For a specific implementation, refer to step 303 in the embodiment shown in FIG. 3: The machine-side device generates the tactile data flow and the first data flow based on the first signal. Details are not described herein again.

In a possible implementation, the generation module 903 is configured to generate the tactile data flow based on the tactile data, where the tactile data flow includes the synchronization identifier; and generate the at least one corresponding first data flow based on the at least one piece of first data, where each of the at least one first data flow includes the synchronization identifier. For a specific implementation, refer to step 303 in the embodiment shown in FIG. 3: The machine-side device generates the tactile data flow and the first data flow based on the first signal. Details are not described herein again.

A sending module 904 is configured to send a tactile data flow and at least one first data flow to the network device. For a specific implementation, refer to step 304 in the embodiment shown in FIG. 3: The machine-side device sends the tactile data flow and the first data flow to the network device. Details are not described herein again.

In this embodiment, the machine-side device may perform an operation performed by the controller in any embodiment shown in FIG. 3. Details are not described herein again.

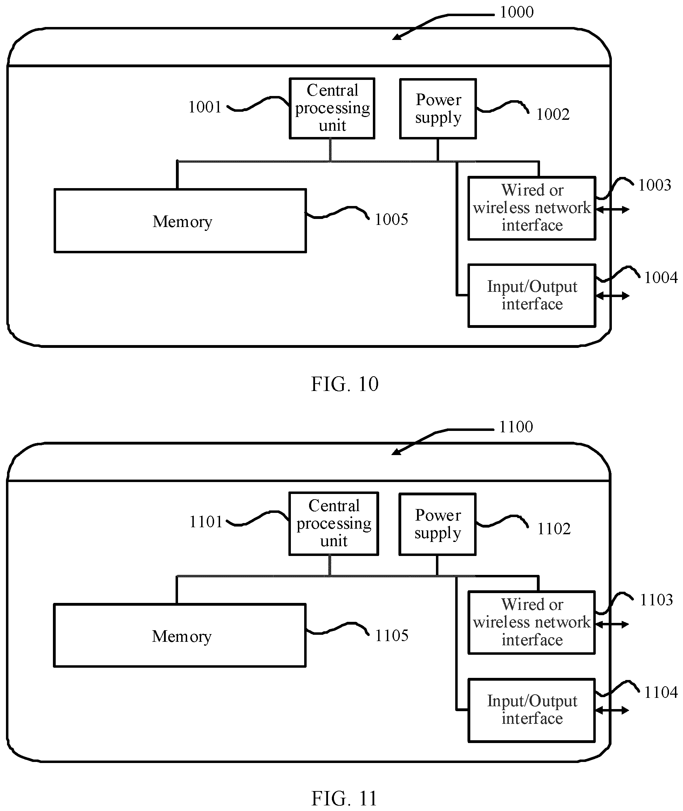

FIG. 10 is a schematic diagram of a structure of a network device according to an embodiment of this application. The network device 1000 may include one or more central processing units (central processing units, CPU) 1001 and a memory 1005. The memory 1005 stores one or more application programs or data.

The memory 1005 may be a volatile memory or a persistent memory. The program stored in the memory 1005 may include one or more modules, and each module may include a series of instruction operations for the network device. Further, the central processing unit 1001 may be configured to communicate with the memory 1005, and execute, on the network device 1000, the series of instruction operations in the memory 1005.

The central processing unit 1001 is configured to execute a computer program in the memory 1005, to enable the network device 1000 to receive, by the network device, a tactile data flow and at least one first data flow that are sent by a machine-side device, where the tactile data flow includes a synchronization identifier, and each of the at least one first data flow includes the synchronization identifier; and synchronize, by the network device, transmission time and a transmission priority of the tactile data flow and transmission time and a transmission priority of the at least one first data flow. For a specific implementation, refer to steps 301 to 306 in the embodiment shown in FIG. 3. Details are not described herein again.

The network device 1000 may further include one or more power supplies 1002, one or more wired or wireless network interfaces 1003, one or more input/output interfaces 1004, and/or one or more operating systems such as Windows ServerTM, Mac OS XTM, UnixTM, LinuxTM, and FreeBSDTM.

The network device 1000 may perform an operation performed by the network device in the embodiment shown in FIG. 3. Details are not described herein again.

FIG. 11 is a schematic diagram of a structure of a machine-side device according to an embodiment of this application. The machine-side device 1100 may include one or more central processing units (central processing units, CPU) 1101 and a memory 1105. The memory 1105 stores one or more application programs or data.

The memory 1105 may be a volatile memory or a persistent memory. The program stored in the memory 1105 may include one or more modules, and each module may include a series of instruction operations for the machine-side device. Further, the central processing unit 1101 may be configured to communicate with the memory 1105, and execute, on the machine-side device 1100, the series of instruction operations in the memory 1105.

The central processing unit 1101 is configured to execute the computer programs in the memory 1105, to enable the machine-side device 1100 to: obtain, by the machine-side device, a first signal, where the first signal includes tactile data and at least one first data flow; generate, by the machine-side device, a corresponding tactile data flow and at least one corresponding first data flow based on the first signal, where the tactile data flow includes a synchronization identifier, and each of the at least one first data flow includes the synchronization identifier; and send, by the machine-side device, the tactile data flow and the at least one first data flow to the network device. For a specific implementation, refer to steps 301 to 306 in the embodiment shown in FIG. 3. Details are not described herein again.

The machine-side device 1100 may further include one or more power supplies 1102, one or more wired or wireless network interfaces 1103, one or more input/output interfaces 1104, and/or one or more operating systems such as Windows ServerTM, Mac OS XTM, UnixTM, LinuxTM, and FreeBSDTM.

The machine-side device 1100 may perform an operation performed by the machine-side device in the embodiment shown in FIG. 3. Details are not described herein again.

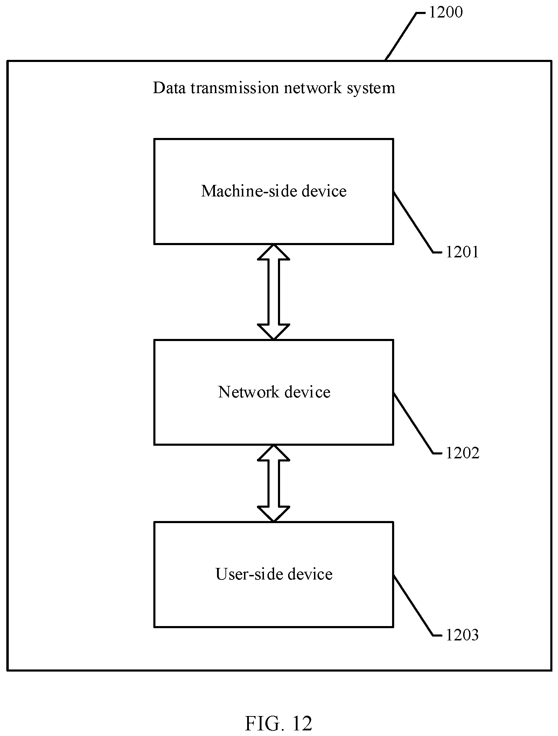

FIG. 12 is a data transmission network system 1200 according to an embodiment of this application. The data transmission network system 1200 may include the machine-side device 1201 shown in FIG. 9, the network device 1202 shown in FIG. 8, and the user-side device 1203. The data transmission network system 1200 may perform operations performed by the data transmission network system in the embodiment shown in FIG. 3. Details are not described herein again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, a division of the units is merely a logical function division. During actual implementation, there may be other division methods. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located at one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data transmission method, wherein the method comprises:
receiving (304), by a network device, a tactile data flow and at least one first data flow that are sent by one or more machine-side devices, wherein packet headers of the tactile data flow and the at least one first data flow comprise a synchronization identifier, and the synchronization identifier comprises a common air interface transmission time interval, TTI, number;
determining, by the network device, for each of the tactile data flow and the at least one first data flow, a scheduling priority based on a quality of service coefficient of the respective data flow;
after the determining, by the network device, for each of the tactile data flow and the at least one first data flow, a scheduling priority based on a quality of service coefficient of the respective data flow, synchronizing (305), by the network device, transmission time of the tactile data flow and transmission time of the at least one first data flow,
wherein the network device includes a 5G base station, which receives the tactile data flow and the at least one first data flow from the one or more machine-side devices over an air interface, and
the synchronizing (305), by the network device, transmission time of the tactile data flow and transmission time of the at least one first data flow comprises:
determining, by the 5G base station, that data packets of the tactile data flow and the at least one first data flow comprise a same synchronization identifier; and
for the data packets of the tactile data flow and the at least one first data flow that comprise the same synchronization identifier:
calculating, by the 5G base station, for each of the at least one first data flow, a difference between a first TTI of the respective first data flow and a first TTI of the tactile data flow, wherein the quality of service coefficient of the tactile data flow is higher than that of each one of the at least one first data flow; and
increasing, in an air interface resource scheduler of the 5G base station, scheduling priorities of the tactile data flow and the at least one first data flow.

2. The method according to claim 1, wherein the synchronizing (305), by the network device, the transmission time of the tactile data flow and the transmission time of the at least one first data flow comprises:
determining, by the network device, the TTI of the tactile data flow and the TTI of the at least one first data flow; and
synchronizing, by the network device, the TTI of the at least one first data flow and the TTI of the tactile data flow.

3. The method according to claim 2, wherein the tactile data flow and the at least one first data flow are sent by a plurality of machine-side devices, and the synchronizing, by the network device, the TTI of the at least one first data flow and the TTI of the tactile data flow comprises:
determining, by the network device, the TTIs of the tactile data flow and the at least one first data flow that are sent by the plurality of machine-side devices; and
synchronizing, by the network device, the TTIs of the at least one first data flow and the tactile data flow that are sent by the plurality of machine-side devices.

4. The method according to claim 3, wherein before the receiving (304), by a network device, a tactile data flow and at least one first data flow that are sent by one or more machine-side devices, the method further comprises:
receiving (301), by the network device, data flow parameter information sent by the plurality of machine-side devices, wherein the data flow parameter information is parameter information of data flows transmitted between the network device and the plurality of machine-side devices and between the network device and a user-side device, and the data flow parameter information comprises the quality of service coefficient of the data flow, a synchronization time reference, and a sensor frequency.

5. The method according to claim 4, wherein the method further comprises:
determining (305), by the network device, a transmission priority of the tactile data flow and a transmission priority of the at least one first data flow; and
synchronizing (305), by the network device, the transmission priority of the tactile data flow and the transmission priority of the at least one first data flow.

6. The method according to claim 5, wherein the determining, by the network device, a transmission priority of the tactile data flow and a transmission priority of the at least one first data flow comprises:
determining, by the network device, products of channel quality coefficients and the quality of service coefficients that correspond to the tactile data flow and the at least one first data flow as first parameters; and
determining, by the network device, ratios of the first parameters to a historical average rate as the transmission priority corresponding to the tactile data flow and the transmission priority corresponding to the at least one first data flow.

7. The method according to claim 6, wherein the method further comprises:
sending (306), by the network device, the tactile data flow and the at least one first data flow to the user-side device.

8. A data transmission method, wherein the method comprises:
obtaining (302), by a machine-side device, a first signal, wherein the first signal comprises tactile data and at least one piece of first data;
generating (303), by the machine-side device, a corresponding tactile data flow and at least one corresponding first data flow based on the first signal, wherein packet headers of the tactile data flow comprises a synchronization identifier, and packet headers of each of the at least one first data flow comprises the synchronization identifier; and
sending (304), by the machine-side device, the tactile data flow and the at least one first data flow to a network device;
wherein the synchronization identifier comprises a common air interface transmission time interval, TTI, number.

9. The method according to claim 8, wherein the generating (303), by the machine-side device, a corresponding tactile data flow and at least one corresponding first data flow based on the first signal comprises:
generating, by the machine-side device, the tactile data flow based on the tactile data, wherein the packet headers of the tactile data flow comprise the synchronization identifier; and
generating, by the machine-side device, the at least one corresponding first data flow based on the at least one piece of first data, wherein the packet headers of each of the at least one first data flow comprise the synchronization identifier.

10. The method according to claim 9, wherein before the obtaining, by a machine-side device, a first signal, the method further comprises:
sending (301), by the machine-side device, data flow parameter information to the network device, wherein the data flow parameter information is parameter information of data flows transmitted between the network device and the machine-side device and between the network device and a user-side device, and the data flow parameter information comprises the quality of service coefficient of the data flow, a synchronization time reference, and a sensor frequency.

11. A communication apparatus (800) comprising units (801, ..., 808) configured to perform the method according to any one of claims 1 to 7.

12. A communication apparatus (900) comprising units (901, ..., 904) configured to perform the method according to any one of claims 8 to 10.

13. A computer-readable storage medium, storing a computer program, wherein when the computer program is executed by a processor, the method according to any one of claims 1 to 10 is implemented.

## Patentansprüche

1. Datenübertragungsverfahren, wobei das Verfahren Folgendes umfasst:
Empfangen (304) eines taktilen Datenflusses und mindestens eines ersten Datenflusses, die durch eine oder mehrere maschinenseitige Vorrichtungen gesendet werden, durch eine Netzwerkvorrichtung, wobei Paket-Header des taktilen Datenflusses und des mindestens einen ersten Datenflusses eine Synchronisationskennung umfasst, und die Synchronisationskennung eine gemeinsame Übertragungszeitintervallnummer, TTI-Nummer, der Luftschnittstelle umfasst;
Bestimmen einer Planungspriorität durch die Netzwerkvorrichtung für jeden des taktilen Datenflusses und des mindestens einen ersten Datenflusses basierend auf einem Dienstgütekoeffizienten des jeweiligen Datenflusses;
nach dem Bestimmen einer Planungspriorität durch die Netzwerkvorrichtung für den taktilen Datenfluss und den mindestens einen ersten Datenfluss basierend auf einem Dienstgütekoeffizienten des jeweiligen Datenflusses, Synchronisieren (305) einer Übertragungszeit des taktilen Datenflusses und einer Übertragungszeit des mindestens einen ersten Datenflusses durch die Netzwerkvorrichtung,
wobei die Netzwerkvorrichtung eine 5G-Basisstation beinhaltet, welche den taktilen Datenfluss und den mindestens einen ersten Datenfluss aus der einen oder den mehreren maschinenseitigen Vorrichtungen über einer Luftschnittstelle empfängt, und
das Synchronisieren (305) einer Übertragungszeit des taktilen Datenflusses und einer Übertragungszeit des mindestens einen ersten Datenflusses durch die Netzwerkvorrichtung Folgendes umfasst:
Bestimmen durch die 5G-Basisstation, dass Datenpakete des taktilen Datenflusses und des mindestens einen ersten Datenflusses dieselbe Synchronisationskennung umfassen; und
für die Datenpakete des taktilen Datenflusses und des mindestens einen ersten Datenflusses, die dieselbe Synchronisationskennung umfassen:
Berechnen einer Differenz zwischen einem ersten TTI des jeweiligen ersten Datenflusses und einem ersten TTI des taktilen Datenflusses durch die 5G-Basisstation für jeden des mindestens einen ersten Datenflusses, wobei der Dienstgütekoeffizient des taktilen Datenflusses höher als jener von jedem des mindestens einen ersten Datenflusses ist; und
Erhöhen von Planungsprioritäten des taktilen Datenflusses und des mindestens einen ersten Datenflusses in einem Luftschnittstellen-Ressourcenplaner der 5G-Basisstation.

2. Verfahren nach Anspruch 1, wobei das Synchronisieren (305) der Übertragungszeit des taktilen Datenflusses und der Übertragungszeit des mindestens einen ersten Datenflusses durch die Netzwerkvorrichtung Folgendes umfasst:
Bestimmen des TTI des taktilen Datenflusses und des TTI des mindestens einen ersten Datenflusses durch die Netzwerkvorrichtung; und
Synchronisieren des TTI des mindestens einen ersten Datenflusses und des TTI des taktilen Datenflusses durch die Netzwerkvorrichtung.

3. Verfahren nach Anspruch 2, wobei der taktile Datenfluss und der mindestens eine erste Datenfluss durch eine Vielzahl von maschinenseitigen Vorrichtungen gesendet werden, und das Synchronisieren des TTI des mindestens einen ersten Datenflusses und des TTI des taktilen Datenflusses durch die Netzwerkvorrichtung Folgendes umfasst:
Bestimmen der TTIs des taktilen Datenflusses und des mindestens einen ersten Datenflusses, die durch die Vielzahl von maschinenseitigen Vorrichtungen gesendet werden, durch die Netzwerkvorrichtung; und
Synchronisieren der TTIs des mindestens einen ersten Datenflusses und des taktilen Datenflusses, die durch die Vielzahl von maschinenseitigen Vorrichtungen gesendet werden, durch die Netzwerkvorrichtung.

4. Verfahren nach Anspruch 3, wobei das Verfahren vor dem Empfangen (304) eines taktilen Datenflusses und mindestens eines ersten Datenflusses, die durch eine oder mehrere maschinenseitige Vorrichtungen gesendet werden, durch eine Netzwerkvorrichtung ferner Folgendes umfasst:
Empfangen (301) von Datenflussparameterinformationen, die durch die Vielzahl von maschinenseitigen Vorrichtungen gesendet werden, durch die Netzwerkvorrichtung, wobei die Datenflussparameterinformationen Parameterinformationen von Datenflüssen sind, die zwischen der Netzwerkvorrichtung und der Vielzahl von maschinenseitigen Vorrichtungen und zwischen der Netzwerkvorrichtung und einer benutzerseitigen Vorrichtung übertragen werden, und die Datenflussparameterinformationen den Dienstgütekoeffizienten des Datenflusses, eine Synchronisationszeitreferenz und eine Sensorfrequenz umfassen.

5. Verfahren nach Anspruch 4, wobei das Verfahren ferner Folgendes umfasst:
Bestimmen (305) einer Übertragungspriorität des taktilen Datenflusses und einer Übertragungspriorität des mindestens einen ersten Datenflusses durch die Netzwerkvorrichtung; und
Synchronisieren (305) der Übertragungspriorität des taktilen Datenflusses und der Übertragungspriorität des mindestens einen ersten Datenflusses durch die Netzwerkvorrichtung.

6. Verfahren nach Anspruch 5, wobei das Bestimmen einer Übertragungspriorität des taktilen Datenflusses und einer Übertragungspriorität des mindestens einen ersten Datenflusses durch die Netzwerkvorrichtung Folgendes umfasst:
Bestimmen von Produkten aus Kanalqualitätskoeffizienten und der Dienstgütekoeffizienten, die dem taktilen Datenfluss und dem mindestens einen ersten Datenfluss entsprechen, als erste Parameter durch die Netzwerkvorrichtung; und
Bestimmen von Verhältnissen der ersten Parameter zu einer historischen Durchschnittsrate als Übertragungspriorität entsprechend dem taktilen Datenfluss und Übertragungspriorität entsprechend dem mindestens einen ersten Datenfluss durch die Netzwerkvorrichtung.

7. Verfahren nach Anspruch 6, wobei das Verfahren ferner Folgendes umfasst:
Senden (306) des taktilen Datenflusses und des mindestens einen ersten Datenflusses durch die Netzwerkvorrichtung an die benutzerseitige Vorrichtung.

8. Datenübertragungsverfahren, wobei das Verfahren Folgendes umfasst:
Erlangen (302) eines ersten Signals durch eine maschinenseitige Vorrichtung, wobei das erste Signal taktile Daten und mindestens einen Teil von ersten Daten umfasst;
Erzeugen (303) eines entsprechenden taktilen Datenflusses und mindestens eines entsprechenden ersten Datenflusses durch die maschinenseitige Vorrichtung basierend auf dem ersten Signal, wobei Paket-Header des taktilen Datenflusses eine Synchronisationskennung umfassen, und Paket-Header jedes des mindestens einen ersten Datenflusses die Synchronisationskennung umfassen; und
Senden (304) des taktilen Datenflusses und des mindestens einen ersten Datenflusses durch die maschinenseitige Vorrichtung an eine Netzwerkvorrichtung;
wobei die Synchronisationskennung eine gemeinsame Übertragungszeitintervallnummer, TTI-Nummer, für die Luftschnittstelle umfasst.

9. Verfahren nach Anspruch 8, wobei das Erzeugen (303) eines entsprechenden taktilen Datenflusses und mindestens eines entsprechenden ersten Datenflusses durch die maschinenseitige Vorrichtung basierend auf dem ersten Signal Folgendes umfasst:
Erzeugen des taktilen Datenflusses durch die maschinenseitige Vorrichtung basierend auf den taktilen Daten, wobei die Paket-Header des taktilen Datenflusses die Synchronisationskennung umfassen; und
Erzeugen des mindestens einen entsprechenden ersten Datenflusses durch die maschinenseitige Vorrichtung basierend auf dem mindestens einen Teil von ersten Daten, wobei die Paket-Header jedes des mindestens einen ersten Datenflusses die Synchronisationskennung umfassen.

10. Verfahren nach Anspruch 9, wobei das Verfahren vor dem Erlangen eines ersten Signals durch eine maschinenseitige Vorrichtung ferner Folgendes umfasst:
Senden (301) von Datenflussparameterinformationen durch die maschinenseitige Vorrichtung an die Netzwerkvorrichtung, wobei die Datenflussparameterinformationen Parameterinformationen von Datenflüssen sind, die zwischen der Netzwerkvorrichtung und der maschinenseitigen Vorrichtung und zwischen der Netzwerkvorrichtung und einer benutzerseitigen Vorrichtung übertragen werden, und die Datenflussparameterinformationen den Dienstgütekoeffizienten des Datenflusses, eine Synchronisationszeitreferenz und eine Sensorfrequenz umfassen.

11. Kommunikationseinrichtung (800), umfassend Einheiten (801, ..., 808), die dazu konfiguriert sind, das Verfahren nach einem der Ansprüche 1 bis 7 durchzuführen.

12. Kommunikationseinrichtung (900), umfassend Einheiten (901, ..., 904), die dazu konfiguriert sind, das Verfahren nach einem der Ansprüche 8 bis 10 durchzuführen.

13. Computerlesbares Speichermedium, das ein Computerprogramm speichert, wobei, wenn das Computerprogramm durch einen Prozessor ausgeführt wird, das Verfahren nach einem der Ansprüche 1 bis 10 implementiert wird.

## Revendications

1. Procédé de transmission de données, dans lequel le procédé comprend :
la réception (304), par un dispositif réseau, d'un flux de données tactiles et d'au moins un premier flux de données qui sont envoyés par un ou plusieurs dispositifs côté machine, dans lequel les en-têtes de paquet du flux de données tactiles et de l'au moins un premier flux de données comprennent un identifiant de synchronisation, et l'identifiant de synchronisation comprend un nombre d'intervalles de temps de transmission, TTI, d'interface radio commune ;
la détermination, par le dispositif réseau, pour chacun du flux de données tactiles et de l'au moins un premier flux de données, d'une priorité de planification sur la base d'un coefficient de qualité de service du flux de données respectif ;
après la détermination, par le dispositif réseau, pour chacun du flux de données tactiles et de l'au moins un premier flux de données, d'une priorité de planification sur la base d'un coefficient de qualité de service du flux de données respectif, la synchronisation (305), par le dispositif réseau, du temps de transmission du flux de données tactiles et du temps de transmission de l'au moins un premier flux de données,
dans lequel le dispositif réseau comporte une station de base 5G, qui reçoit le flux de données tactiles et l'au moins un premier flux de données en provenance des un ou plusieurs dispositifs côté machine via une interface radio, et
la synchronisation (305), par le dispositif réseau, du temps de transmission du flux de données tactiles et du temps de transmission de l'au moins un premier flux de données comprend :
la détermination, par la station de base 5G, que les paquets de données du flux de données tactiles et l'au moins un premier flux de données comprennent un même identifiant de synchronisation ; et
pour les paquets de données du flux de données tactiles et l'au moins un premier flux de données qui comprennent le même identifiant de synchronisation :
le calcul, par la station de base 5G, pour chacun de l'au moins un premier flux de données, d'une différence entre un premier TTI du premier flux de données respectif et un premier TTI du flux de données tactiles, dans lequel le coefficient de qualité de service du flux de données tactiles est supérieur à celui de chacun de l'au moins un premier flux de données ; et
l'augmentation, dans un planificateur de ressources d'interface radio de la station de base 5G, de priorités de planification du flux de données tactiles et de l'au moins un premier flux de données.

2. Procédé selon la revendication 1, dans lequel la synchronisation (305), par le dispositif réseau, du temps de transmission du flux de données tactiles et du temps de transmission de l'au moins un premier flux de données comprend :
la détermination, par le dispositif réseau, du TTI du flux de données tactiles et du TTI de l'au moins un premier flux de données ; et
a synchronisation, par le dispositif réseau, du TTI de l'au moins un premier flux de données et du TTI du flux de données tactiles.

3. Procédé selon la revendication 2, dans lequel le flux de données tactiles et l'au moins un premier flux de données sont envoyés par une pluralité de dispositifs côté machine, et la synchronisation, par le dispositif réseau, du TTI de l'au moins un premier flux de données et du TTI du flux de données tactiles comprend :
la détermination, par le dispositif réseau, des TTI du flux de données tactiles et de l'au moins un premier flux de données qui sont envoyés par la pluralité de dispositifs côté machine ; et
la synchronisation, par le dispositif réseau, des TTI de l'au moins un premier flux de données et du flux de données tactiles qui sont envoyés par la pluralité de dispositifs côté machine.

4. Procédé selon la revendication 3, dans lequel, avant la réception (304), par un dispositif réseau, d'un flux de données tactiles et d'au moins un premier flux de données qui sont envoyés par un ou plusieurs dispositifs côté machine, le procédé comprend en outre :
la réception (301), par le dispositif réseau, d'informations de paramètres de flux de données envoyées par la pluralité de dispositifs côté machine, dans lequel les informations de paramètres de flux de données sont des informations de paramètres de flux de données transmis entre le dispositif réseau et la pluralité de dispositifs côté machine et entre le dispositif réseau et un dispositif côté utilisateur, et les informations de paramètres de flux de données comprennent le coefficient de qualité de service du flux de données, une référence de temps de synchronisation et une fréquence de capteur.

5. Procédé selon la revendication 4, dans lequel le procédé comprend en outre :
la détermination (305), par le dispositif réseau, d'une priorité de transmission du flux de données tactiles et d'une priorité de transmission de l'au moins un premier flux de données ; et
la synchronisation (305), par le dispositif réseau, de la priorité de transmission du flux de données tactiles et de la priorité de transmission de l'au moins un premier flux de données.

6. Procédé selon la revendication 5, dans lequel la détermination, par le dispositif réseau, d'une priorité de transmission du flux de données tactiles et d'une priorité de transmission de l'au moins un premier flux de données comprend :
la détermination, par le dispositif réseau, de produits de coefficients de qualité de canal et des coefficients de qualité de service qui correspondent au flux de données tactiles et à l'au moins un premier flux de données en tant que premiers paramètres ; et
la détermination, par le dispositif réseau, de rapports des premiers paramètres à un débit moyen historique en tant que priorité de transmission correspondant au flux de données tactiles et priorité de transmission correspondant à l'au moins un premier flux de données.

7. Procédé selon la revendication 6, dans lequel le procédé comprend en outre :
l'envoi (306), par le dispositif réseau, du flux de données tactiles et de l'au moins un premier flux de données vers le dispositif côté utilisateur.

8. Procédé de transmission de données, dans lequel le procédé comprend :
l'obtention (302), par un dispositif côté machine, d'un premier signal, dans lequel le premier signal comprend des données tactiles et au moins un élément de premières données ;
la génération (303), par le dispositif côté machine, d'un flux de données tactiles correspondant et d'au moins un premier flux de données correspondant sur la base du premier signal, dans lequel les en-têtes de paquet du flux de données tactiles comprennent un identifiant de synchronisation, et les en-têtes de paquets de chacun de l'au moins un premier flux de données comprennent l'identifiant de synchronisation ; et
l'envoi (304), par le dispositif côté machine, du flux de données tactiles et de l'au moins un premier flux de données vers un dispositif réseau ;
dans lequel l'identificateur de synchronisation comprend un nombre d'intervalles de temps de transmission, TTI d'interface radio commune.

9. Procédé selon la revendication 8, dans lequel la génération (303), par le dispositif côté machine, d'un flux de données tactiles correspondant et d'au moins un premier flux de données correspondant sur la base du premier signal comprend :
la génération, par le dispositif côté machine, du flux de données tactiles sur la base des données tactiles, dans lequel les en-têtes de paquet du flux de données tactiles comprennent l'identifiant de synchronisation ; et
la génération, par le dispositif côté machine, de l'au moins un premier flux de données correspondant sur la base de l'au moins un élément de premières données, dans lequel les en-têtes de paquet de l'au moins un premier flux de données comprennent l'identifiant de synchronisation.

10. Procédé selon la revendication 9, dans lequel, avant l'obtention, par un dispositif côté machine, d'un premier signal, le procédé comprend en outre :
l'envoi (301), par le dispositif côté machine, d'informations de paramètres de flux de données au dispositif réseau, dans lequel les informations de paramètres de flux de données sont des informations de paramètres de flux de données transmis entre le dispositif réseau et le dispositif côté machine et entre le dispositif réseau et un dispositif côté utilisateur, et les informations de paramètres de flux de données comprennent le coefficient de qualité de service du flux de données, une référence de temps de synchronisation et une fréquence de capteur.

11. Appareil de communication (800), comprenant des unités (801, ..., 808) configurées pour réaliser le procédé selon l'une quelconque des revendications 1 à 7.

12. Appareil de communication (900), comprenant des unités (901, ..., 904) configurées pour réaliser le procédé selon l'une quelconque des revendications 8 à 10.

13. Support de stockage lisible par ordinateur, stockant un programme informatique, dans lequel lorsque le programme informatique est exécuté par un processeur, le procédé selon l'une quelconque des revendications 1 à 10 est mis en œuvre.
